# EUROPEAN PATENT APPLICATION

(11) **EP 1 076 004 A1**
(43) Date of publication of application: **14.02.2001**
(21) Application number: 00202781.1
(22) Date of filing: 07.08.2000
(51) Int. Cl.: B63H 23/32, F16J 15/16, F16J 15/34

(54) **Bulkhead seal, such as for passing a marine propeller shaft through a watertight parttion bulkhead**

(30) Priority: 10.08.1999 NL 1012801
(71) Applicant: IHC HOLLAND N.V., NL-3361 EP Sliedrecht (NL)
(72) Inventor: Visser, Teunis, 3361 GB Sliedrecht (NL)
(74) Representative: Lips, Hendrik Jan George, Ir.

(57) **Abstract**

Partition feed-through device, as it serves aboard ships in particular for guiding a shaft (13), such as a marine propeller shaft, through a watertight bulkhead (1). The partition feed-through device comprises two sealing rings (17), each having a substantially L-shaped cross-section and being mountable on the shaft (13) in such a way, that the free ends of the axially extending legs (18) of the sealing rings abut each other and are dimensioned in such a way, that they enclose said shaft (13) under prestress near said ends (21). The free ends (22) of the radially extending legs (19) can resiliently abut the surfaces (23) of radially extending side walls (12) of the housing (5) facing each other. The radially extending legs (19), as seen from the shaft (13), will part slightly, and thus take up a somewhat oblique position.

## Description

The invention relates to a partition feed-through device, as it serves aboard ships in particular for guiding a shaft, such as a marine propeller shaft, through a water-tight bulkhead, said partition feed-through device comprising at least one sealing ring of rubber or a similar resilient material, which can be applied around said shaft and comprises legs extending from said shaft, the free ends of said legs engaging radially extending walls of a housing in which said ring is incorporated, which housing can be connected to said partition.

Such a device is known by US-A-4 188 039. In case of such a device, it should be taken into account, that the shaft will not always take up the same position in relation to the bulkhead, and thus to the housing connected to it. Due to temperature changes and distortions of the structure of the ship, as a result of varying loads exerted on it, the shaft is able to perform both radial and axial movements in relation to the bulkhead.

It case of the known device one single sealing ring is used having an U-shaped cross section. The inwardly facing surface of the wall of said ring, connecting the legs of it, is curved somewhat towards the shaft such that a part of it is engaging the shaft over a given distance. So normally the ring will be taken along by said shaft. When, however, water is flowing along one of the legs into said housing, the end of the other leg of said sealing ring has to be pressed against the wall of said housing. Then the shaft will rotate in respect to the sealing ring. By the relatively large engaging surface between the shaft and the sealing ring a considerable friction will occur. Caused by said relatively large engaging surface movement of the sealing ring in respect of the shaft, when the latter moves in axial direction, is opposed. As a consequence of this wear of the ends of the radially extending legs of said ring will increase. Further substantially only one single sealing surface between the sealing ring and the shaft is present.

To take care that the ends of the legs of the U-shaped sealing ring will engage the walls of said housing the outer parts of these legs extend obliquely outwardly. Further these ends are having a smaller cross section than the other parts of said sealing ring. They engage, however, the walls of said housing over a given distance so that friction and by this wear will occur.

The object of the invention is to provide a partition feed-through device meeting higher requirements, e.g. that during operation of said device there will be hardly any wear of the sealing ring.

The feed-through device according to the invention is characterized in that it comprises two sealing rings, each sealing ring having a substantially L-shaped cross-section and being mountable on the shaft in such a way, that the free ends of the axially extending legs of the sealing rings abut each other, each of said legs near its end being provided with a sealing rib engaging said shaft, such that the sealing ribs of both legs are distanced from each other, the legs, connected to said axially extending legs, extending from their connecting points obliquely away from each other towards the opposing surfaces of the walls of said housing and there being provided with a thickened portion for increasing the mass of said end.

In the normal case, the sealing rings will rotate along with the shaft and two sealing ribs will engage the shaft at some distance from each other. When the sealing rib of the sealing ring, present at that side where water might enter a compartment, should not be able to stop the water, the sealing rib of the other ring is still available.

The sealing ribs of the obliquely extending legs will abut the side walls of the housing with a small force. When now the shaft rotates and takes the rings along, the radially extending legs will be bent slightly stronger towards the radial position, under the influence of the centrifugal force. Said effect will be increased by the presence of the thickened portion near the end of said legs. In this way it is achieved that, when the shaft rotates, the force by which the ends of the radial legs abut the side walls of the housing will be extremely low if not zero. Owing to that, radial movements of the shaft in relation to the housing are received without any occurrence of wear of the sealing rings.

It is remarked that DE 40 02 245 shows a device with one single sealing ring comprising a disc positioned in a radially running plane, said disc being provided with a perpendicular to it running cilindrical portion extending towards a sealing surface. The mass of said cilindrical portion will take care for it that, when said shaft rotates, said portion will move away from said sealing surface by the bending of said disc.

In case of the device according to the present invention the end edges of the side walls of the housing are provided with collars facing each other and being situated near the transition area between the radially and axially extending legs of the sealing rings.

By this it is prevented that the radially extending leg of one sealing ring is pressed against the related side wall of the housing with a larger surface area during axial movements of the shaft. As well the sealing rings may be moved slightly in relation to the shaft in that with the axial movement of the shaft one of the sealing rings will come into engagement with the collar of the related side wall of the housing. This prevents overload of the sealing surface between the sealing ring and the side wall of the housing.

In case of the known device it is tried to obtain substantially the same effect by providing the radial legs of the sealing ring with parts of extending rings, which parts seperately have to be connected to the legs.

Providing the walls of a housing with collars is shown in EP 0 326 909. Said collars, however, are positioned at a distance from the place where the radial legs are connected to the further part of the sealing ring. In case of said known device movement of the shaft will hardly occur as said device is in the shape of a "labyrinth sealing" and not suitable for guiding a shaft through a watertight bulkhead.

In order to keep the sealing rings in the proper position in relation to each other in case of the present invention, it can be provided for, that the ends of the axially extending legs of the sealing rings are connected to each other by a coupling piece.

Additionally, said coupling piece can be provided with axial lips extending to both sides up to near the radially extending legs of the two sealing rings.

Through this, it can be provided for that the radially extending legs of the sealing rings maintain their positions in relation to their axially extending legs as much as possible, even if the shaft performs axial movements in relation to the housing of the partition feed-through device.

In order to achieve a reliable connection between the parts, the sealing rings and the coupling piece can be provided with engaging parts, such as ribs and grooves, and said parts can be connected to each other by glueing.

In most cases, a marine propeller shaft will be provided with flanges so that the housing can not simply be slid onto the shaft, or mounting the housing onto the shaft will involve many dismounting and mounting operations.

In connection with this, the housing as well as the sealing rings can be divided into two parts according to one axial plane, such that they can be mounted around the shaft as this is the case according to Us 4 188 039.

In that case the coupling piece also can be divided into two parts in such a way that the places where the end faces of the cuts through the sealing rings and those through the coupling piece are glued together will be off-set. As a consequence of this the assembly will be additionally reinforced. It is also possible to vulcanize the sealing rings and the coupling piece as a whole.

In order to prevent dirt from penetrating along the sealing rings, dirt barriers of a flexible material such as rubber can be mounted outside of the side walls of the housing, said barriers engaging the housing side walls and the shaft. Said dirt barriers will preferably have an L-shaped cross-section.

The invention is further explained by way of an example, illustrated in the drawing, in which:
Fig. 1 schematically shows a longitudinal section across a part of a partition feed-through device with the partition present in it, and the shaft received in the feed-through;
Fig. 2 shows an axial view of the partition feed-through device of figure 1, the dirt barrier and the partition being omitted; and
Fig. 3 shows a plan view of the partition feed-through device of Fig. 1.

In the drawing a partition 1, in the shape of a watertight bulkhead, is provided with an opening 2 in which the flange ring 3 is applied. The housing 5 of the partition feed-through device 6 can be connected to said flange ring 3 by means of bolts 4 and using the gasket ring 7.

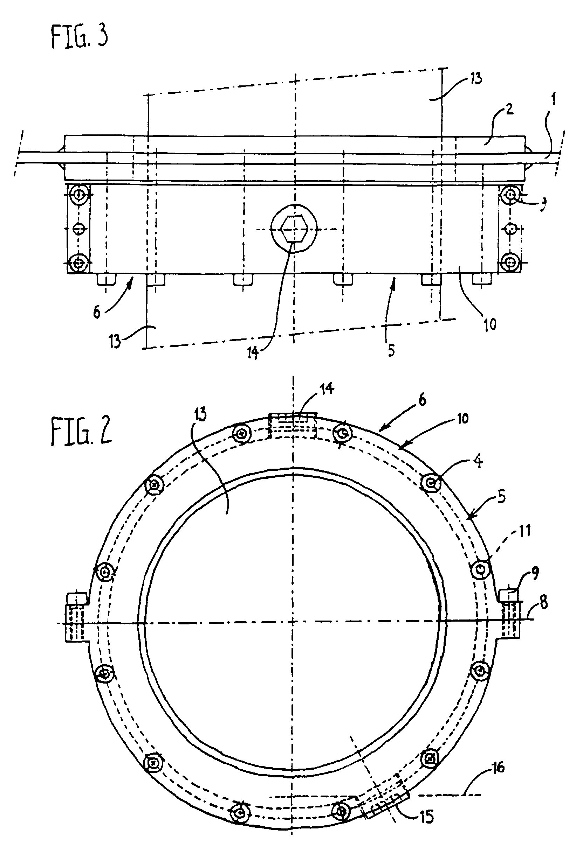

As appears from figure 2 in particular, the housing 5 is divided in two parts according to the axial plane 8. Said parts are pulled against each other by means of bolts 9, possibly with interposition of a sealing material.

The housing 5 comprises a cylindrical portion 10 through which the bores 11 extend in which the bolts 4 are received. Further, said housing 5 comprises two radial side walls 12 extending towards the shaft 13. As appears from the Figures 2 and 3 in particular, in its top side, the housing is provided with a filler opening with filler cap 14 and near the bottom side with a connection 15 for checking whether the grease or oil filled in the housing is at the desired level 16.

In the housing 5 there are two sealing rings 17 each having a substantially L-shaped cross-section and consisting of an axially extending leg 18 and a radially extending leg 19 being connected in an area 20. The leg 18 abuts the shaft 13 with an edge 21 and the leg 19 abuts the inner surface 23 of the side wall 12 of the housing 5 with an edge 22.

Near said edge 22, the leg 19 is provided with a thickened portion 24 for increasing its mass. Therefore, the centrifugal force exerted on the leg 19 will likewise increase when raising the speed of the shaft 13. Due to this, friction between the edge 22 and the surface 23 of the wall 12 will be minimal, in particular at higher speeds of the shaft 13. Therefore, radial movements of the shaft 13, as indicated by the arrow R, will not or hardly result in wear of the sealing rings 17.

Both sealing rings 17 have their legs 18 contacting each other and said legs can be connected by means of a coupling part 25, which can be glued to the legs 18, for example. For achieving a proper connection between the parts 18 and 25, these can be provided with engaging ribs and grooves not further indicated.

The coupling part 25 can be provided with axial lips 26 extending to both sides up to near the legs 19 of said two sealing rings 17. Owing to this, it is provided for that the legs 19 of the sealing rings 17 maintain the proper position in relation to their legs 18 as much as possible, even when the shaft 13 performs axial movements in relation to the housing 5, as this is indicated by the arrow P.

The end edges 27 of the side walls 12 of the housing 5 are provided with collars 28 facing each other, which are situated near the transition area 20 between the legs 18 and 19 of the sealing rings 17.

Due to this, said sealing rings 17 will be able to be moved in relation to the shaft 13, as is indicated by an arrow P, in that on axial movement of the shaft 13, one of the sealing rings 17 will abut the collar 28 of the related side wall 12 of the housing 5. The leg 19 will thus always occupy a somewhat oblique position so that substantially only its edge 22 will be in contact with the inner surface 23 of the housing 5.

In order to prevent dirt from entering the housing 5 along the sealing rings 17, dirt barriers 29 of a flexible material such as rubber are mounted outwardly of the side walls 12 of the housing. Said dirt barriers have an L-shaped cross-section and have one side abutting the outer surface 30 of the side walls 12 of the housing 5 and the other side abutting the shaft 13.

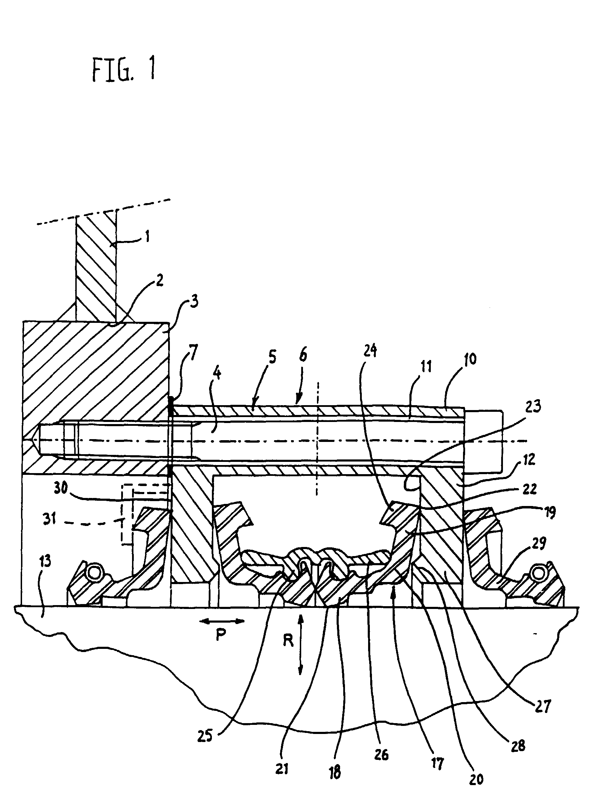

In order to prevent the dirt barriers 29 from losing contact with the outer surface 30 of the wall 12 of the housing 5 on axial movements of the shaft 13, the wall 12 can be provided with a stop 31, such as is indicated by dash lines in Figure 1.

It will be obvious, that only one possible embodiment of a partition feed-through device according to the invention has been illustrated in the drawing and described above, and that many modifications can be made without leaving the inventive idea, as it is indicated in the accompanying claims.

## Claims

1. Partition feed-through device, as it serves aboard ships in particular for guiding a shaft (13), such as a marine propeller shaft, through a watertight bulkhead (1), said partition feed-through device comprising at least one sealing ring (17) of rubber or a similar resilient material, which can be applied around said shaft (13) and comprises legs (19) extending from said shaft, the free ends of said legs engaging radially extending walls (12) of a housing (5) in which said sealing ring is incorporated, which housing can be connected to said partition, characterized in that the feed-through device (6) comprises two sealing rings (17), each having a substantially L-shaped cross-section and being mountable on the shaft (13) in such a way, that the free ends of the axially extending legs (18) of the sealing rings abut each other, each of said legs near its end being provided with a sealing rib engaging said shaft, such that the sealing ribs of both legs (18) are distanced from each other, the legs (19), connected to said axially extending legs (18), extending from their connecting points (20) obliquely away from each other towards the opposing surfaces (23) of the side walls (12) of said housing (5) and there being provided with an inwardly directed thickened portion (24) for increasing the mass of said end.

2. Partition feed-through device according to claim 1, characterized in that the the end edges (27) of the side walls (12) of the housing (5) are provided with collars (28) facing each other and being situated near the transition area (20) between the radially and axially extending legs (18,19) of the sealing rings (17).

3. Partition feed-through device according to claim 1 or 2, characterized in that the ends of the axially extending legs (18) of the sealing rings (17) are connected to each other by a coupling piece (25).

4. Partition feed-through device according to claim 3, characterized in that the coupling piece (25) is provided with axial lips (26) extending to both sides up to near the radially extending legs (19) of the two sealing rings (17).

5. Partition feed-through device according to claim 3 or 4, characterized in that the sealing rings (17) and the coupling piece (25) are provided with engaing parts, such as ribs and grooves, said coupling piece being connected to the sealing rings (17) by glueing.

6. Partition feed-through device according to one of the claims 3 - 5, characterized in that the housing (5), the sealing rings (17) and the coupling piece (25) are divided into two parts according to one axial plane (8), in such a way that the places where the end faces of the cuts through the sealing rings (17) and those through the coupling piece (25) are glued together will be offset.

7. Partition feed-through device according to one of the claims 3 - 6, characterized in that the sealing rings (17) and the coupling piece (25) are vulcanized as a whole.

8. Partition feed-through device according to one of the preceding claims, characterized in that dirt barriers (29) of a flexible material such as rubber are mounted outside of the side walls (12) of the housing (5), said barriers engaging the housing (5) side walls (12) and the shaft (13), said dirt barriers having an L-shaped cross-section.
